# EUROPÄISCHE PATENTSCHRIFT

(11) **EP 1 640 248 B1**
(45) Veröffentlichungstag und Bekanntmachung des Hinweises auf die Patenterteilung: **28.05.2008**
(21) Anmeldenummer: 05020817.2
(22) Anmeldetag: 23.09.2005
(51) Int. Cl.: B62D 15/02, B62D 6/10

(54) **Verfahren zur Montage eines Lenkwinkel- und Lenkmomentsensors sowie Lenkgetriebe mit einem Lenkwinkel- und Lenkmomentsensor**
Method of mounting a steering angle and steering torque sensor and steering gear with a steering angle and steering torque sensor
Procédé de montage d'un capteur d'angle et de couple de braquage et boîte de direction avec un capteur d'angle et de couple de braquage

(30) Priorität: 28.09.2004 DE 102004046946
(43) Veröffentlichungstag der Anmeldung: 29.03.2006
(73) Patentinhaber: TRW Automotive GmbH, 73553 Alfdorf (DE)
(72) Erfinder: Lausser, Christof, 47803 Krefeld (DE); Becker, Ingo, 52441 Linnich (DE)
(74) Vertreter: Sties, Jochen

(56) Entgegenhaltungen:
- EP-A- 1 388 484
- EP-A- 1 413 499
- DE-A1- 3 703 591
- DE-A1- 19 935 283
- US-A1- 2004 173 734

## Beschreibung

Die Erfindung betrifft ein Verfahren zur Montage eines Lenkwinkel- und Lenkmomentsensors an einem Lenkgetriebe. Die Erfindung betrifft ferner ein Lenkgetriebe mit einem Lenkwinkel- und Lenkmomentsensor.

Bei modernen Lenksystemen wird der Lenkwinkel- und Lenkmomentsensor dazu verwendet, einer Steuereinheit einer Servolenkung oder einem elektronischen Stabilitäts-Programm verschiedene Daten bereitzustellen. Problematisch dabei ist die Montage des Sensors im Lenkgetriebe. Wenn sich das Lenkgetriebe in der Nullage befindet, die einer Geradeausfahrt des Fahrzeugs entspricht, sollte der Sensor für den Lenkwinkel ein Signal abgeben, welches ebenfalls der Nullage entspricht. Dies könnte gewährleistet werden, wenn alle Bauteile des Lenkgetriebes zusammengesetzt werden, in die Nullage gebracht werden und erst dann der Sensor fest mit der Lenkwelle und dem Gehäuse des Lenkgetriebes verbunden werden könnte. Aus Platzgründen ist dies jedoch nicht möglich, da nach der Montage des Sensors im Lenkgetriebe die verschiedenen Bauteile kaum zugänglich sind. Ein solcher Sensor ist durch DE 3 703 591 bekannt.

Die Aufgabe der Erfindung besteht darin, ein Verfahren zur Montage eines Lenkwinkel- und Lenkmomentsensors an einem Lenkgetriebe sowie ein Lenkgetriebe zu schaffen, bei dem der Sensor, wenn sich das Lenkgetriebe in der Nullage befindet, sich mit hoher Genauigkeit ebenfalls in der Nullage befindet.

Zur Lösung dieser Aufgabe sind erfindungsgemäß bei einem Verfahren zur Montage eines Lenkwinkel- und Lenkmomentsensors an einem Lenkgetriebe die folgenden Schritte vorgesehen: Es wird ein Lenkwinkel- und Lenkmomentsensor bereitgestellt, der ein Gehäuse und einen Rotor aufweist. Der Rotor wird relativ zum Gehäuse um einen vorbestimmten Winkelbetrag gegenüber einer Nullage verdreht. Der Rotor wird an einer Lenkwelle angebracht, die mit einer Ritzelverzahnung versehen ist. Die Lenkwelle wird in ein Lenkgetriebe eingesetzt, das eine Zahnstange aufweist, wobei das Gehäuse in einer vorbestimmten Winkelstellung am Lenkgetriebe festgelegt wird und die Lenkwelle zusammen mit dem Rotor durch den Eingriff der Ritzelverzahnung in die Zahnstange gedreht wird, bis der Rotor relativ zum Gehäuse die Nullage wieder erreicht. Das erfindungsgemäße Verfahren beruht auf dem Grundgedanken, den Sensor um genau den Winkelbetrag "zu verstimmen", um den die Lenkwelle bei der Montage im Lenkgetriebe zwangsläufig gedreht wird. Da die Lenkwelle spielfrei in die Zahnstange des Lenkgetriebes eingreift, läßt sich die aus der Montage resultierende Drehung der Lenkwelle mit hoher Genauigkeit bestimmen. Wenn mit derselben hohen Genauigkeit vor der Montage der Rotor und das Gehäuse des Sensors gegeneinander verdreht werden, wird nach der Montage die Nullage des Sensors mit entsprechend hoher Genauigkeit erhalten. Der einzig toleranzbehaftete Montageschritt, nämlich das Verdrehen von Gehäuse und Rotor des Sensors gegeneinander, kann in einem Zustand vorgenommen werden, in welchem alle Bauteile gut zugänglich sind, nämlich außerhalb des Lenkgetriebes.

Es ist erkennbar, daß die beiden Schritte "Verdrehen des Sensors aus der Nullage" und "Montage des Rotors an der Lenkwelle" in beliebiger Reihenfolge vorgenommen werden können. Es ist auch offensichtlich, daß der erfindungsgemäße Gedanke auch dadurch verwirklicht werden kann, daß vor der Montage die Zahnstange des Lenkgetriebes aus ihrer Nullage herausbewegt wird, während die Lenkwelle mit einem sich in der Nullage befindenden Sensor in das Lenkgetriebe eingesetzt wird. Beim Einsetzen der Lenkwelle verdreht sich diese, so daß der Sensor aus seiner Nullage heraus verdreht wird. Der Sensor erreicht dabei eine derart weit gegenüber der Nullage verdrehte Stellung, die mit der aus der Nullage verschobenen Stellung der Zahnstange übereinstimmt. Sobald die Zahnstange wieder in die Nullage zurückgestellt wird, nimmt auch der Sensor wieder seine Nullage ein.

Zur Lösung der oben genannten Aufgabe ist auch ein Lenkgetriebe mit einem Lenkwinkel- und Lenkmomentsensor vorgesehen, wobei der Sensor ein Gehäuse und einen Rotor aufweist, wobei das Gehäuse mittels einer Schiebeführung am Lenkgetriebe festgelegt ist. Die Schiebeführung gewährleistet, daß das Gehäuse des Sensors drehfest mit dem Lenkgetriebe gekoppelt ist.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer perspektivischen, teilgeschnittenen Ansicht ein Lenkgetriebe zu Beginn der Montage;
- Figur 2 das Lenkgetriebe von Figur 1 während der Montage;
- Figur 3 das Lenkgetriebe von Figur 1 im montierten Zustand;
- Figur 4 eine Draufsicht auf den beim Lenkgetriebe von Figur 1 verwendeten Lenkwinkel- und Lenkmomentsensor; und
- Figur 5 den Sensor von Figur 4 in einer Seitenansicht.

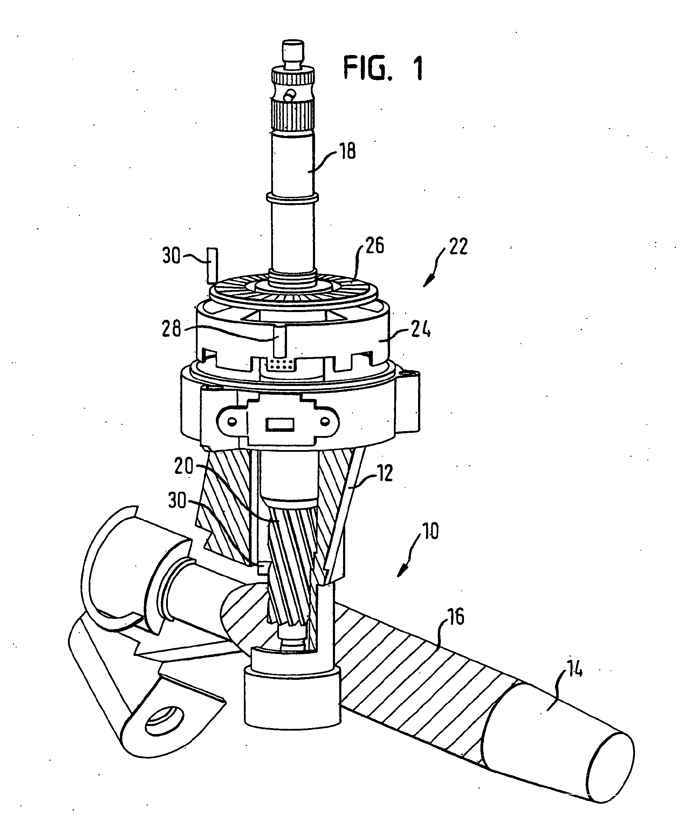

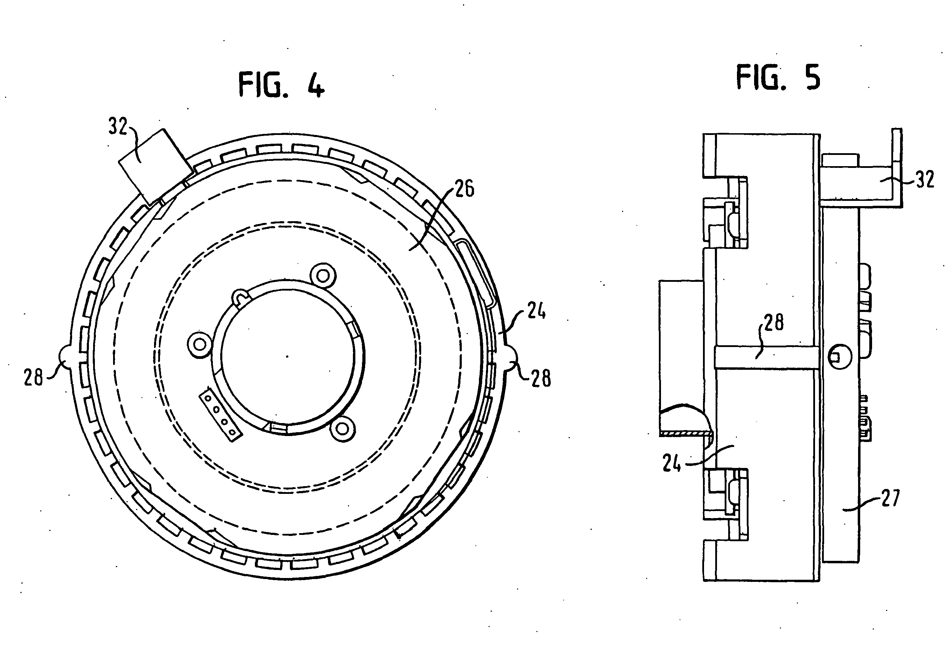

In Figur 1 ist schematisch ein Lenkgetriebe 10 gezeigt, welches ein Lenkgetriebegehäuse 12, eine darin verschiebbar angeordnete Zahnstange 14 mit einer Verzahnung 16 sowie eine Lenkwelle 18 aufweist. Die Lenkwelle weist eine Ritzelverzahnung 20 auf, die dafür vorgesehen ist, in die Verzahnung 16 der Zahnstange 14 einzugreifen. Sowohl die Verzahnung 16 als auch die Ritzelverzahnung 20 sind Schrägverzahnungen. An der Lenkwelle 18 ist außerdem ein Lenkwinkel- und Lenkmomentsensor 22 (siehe auch die Figuren 4 und 5) angebracht. Dieser weist als wesentliche Bauteile ein Gehäuse 24 und einen Rotor 26 auf. Das Gehäuse 24 ist dafür vorgesehen, fest am Lenkgetriebe 10 angeordnet zu werden, und der Rotor 26 ist drehfest an der Lenkwelle 18 angebracht. Das Gehäuse 24 weist auch ein Wickelfedergehäuse 27 auf, in dessen Inneren eine Wickelfeder angeordnet ist, die eine elektrische Verbindung zu verschiedenen Bauteilen des Rotors über mehrere Umdrehungen in der einen oder anderen Richtung ermöglicht.

Das Gehäuse 24 des Sensors 22 ist auf seiner Außenseite mit zwei vorstehenden Nasen 28 versehen, die zur Festlegung des Gehäuses relativ zum Lenkwellengehäuse 12 dienen. Zu diesem Zweck weist das Lenkwellengehäuse komplementär geformte Aussparungen auf. Auf diese Weise ist eine Schiebeführung gebildet. Am Gehäuse 24 ist außerdem ein Steckverbinder 29 vorgesehen, in den ein komplementärer Steckverbinder eingreifen kann, so daß der Sensor 22 an eine Steuerelektronik angeschlossen werden kann.

Zur Montage des Lenkgetriebes 10 wird die Zahnstange 14 in dem Lenkgetriebegehäuse 12 in ihre Mittellage oder Nullage gebracht. Außerdem wird der Sensor 22 an der Lenkwelle 18 angebracht. Genauer gesagt wird der Rotor 26 des Sensors 22 drehfest an der Lenkwelle 18 befestigt. Zu diesem Zweck können Nasen, Nuten, Keilwellenverzahnungen oder andere Gestaltungen verwendet werden. Dann wird der Rotor 26 relativ zum Gehäuse 24 um einen vorbestimmten Winkelbetrag aus der Nullage heraus verdreht. Dies ist in Figur 1 dadurch angedeutet, daß zur Erläuterung gezeigte Positionsmarken 30, die der Nullage entsprechen, gegenüber der Nullage um etwa 90° verdreht ist. Die Nullage entspricht der in Figur 1 sichtbaren Nase 28 am Gehäuse 24. In dieser verdrehten Position wird der Rotor 26 relativ zum Gehäuse 24 durch ein Arretierungsmittel 32 (siehe die Figuren 4 und 5) arretiert. Beim Arretierungsmittel 32 handelt es sich insbesondere um einen Clip, der in geeignete Aussparungen am Rotor 26 und am Gehäuse 24 eingreift und den Sensor in seiner aus der Nullage heraus verdrehten Stellung arretiert. Der Winkelbetrag, um den der Rotor 26 relativ zum Gehäuse 24 aus der Nullage heraus verdreht wird, ergibt sich aus den nachfolgenden Erläuterungen. Es ist offensichtlich, daß der Rotor 26 relativ zum Gehäuse 24 auch verdreht werden kann, bevor der Sensor 22 an der Lenkwelle 18 angebracht wird.

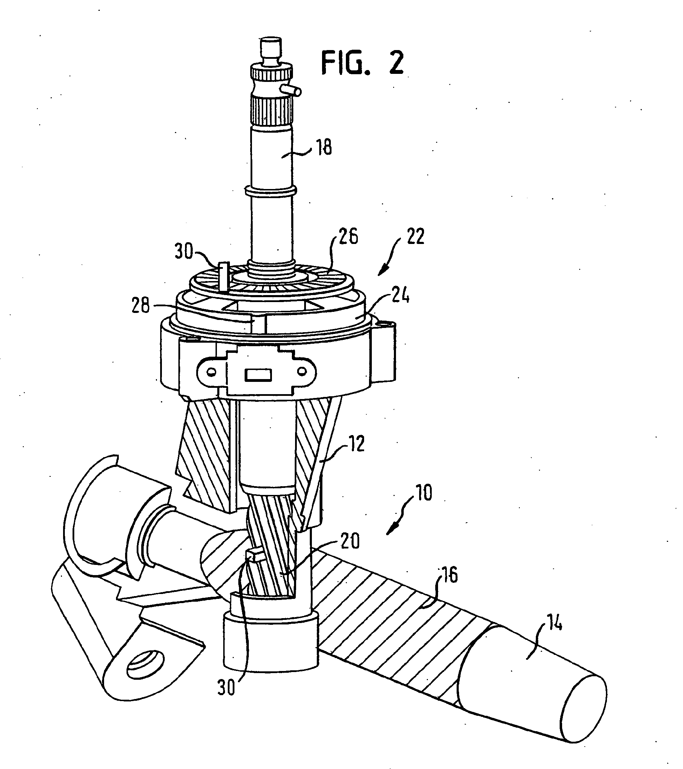

Wenn die Lenkwelle 18 zusammen mit dem an ihr angebrachten Sensor 22 in das Lenkgetriebegehäuse 12 eingesetzt wird, wird er zuerst visuell korrekt ausgerichtet und mit der Ritzelverzahnung 20 in die Zahnstange eingesetzt. Dies ist problemlos möglich, da die Ritzelverzahnung entsprechend der Anzahl ihrer Zähne nur wenige Positionen vorgibt, die sich in ihrer Ausrichtung so stark voneinander unterscheiden, daß allein visuell die richtige ausgewählt werden kann. dann wird die Lenkwelle in das Gehäuse eingeschoben, bis die Nasen 28 am Gehäuse 24 des Sensors 22 in die zugeordneten Aussparungen am Lenkgetriebegehäuse 12 eingreifen und das Gehäuse 24 korrekt positionieren. Nachdem die Nasen 28 des Gehäuses 24 des Sensors 22 relativ zum Lenkgetriebegehäuse 12 festgelegt sind, wird das Arretierungsmittel 32 entfernt. Wenn die Lenkwelle 18 weiter eingeschoben wird, wird die Lenkwelle 18 relativ zum Gehäuse 24 des Sensors 22 gedreht, da die Ritzelverzahnung 20 zusammen mit der Verzahnung 16 der Zahnstange 14 eine Zwangsdrehung hervorruft, während das Gehäuse 24 des Sensors 22 über die Nasen 28 drehfest relativ zum Lenkgetriebegehäuse 12 gehalten wird. In Figur 2 ist die Lenkwelle 18 während des Einschiebens in das Lenkgetriebegehäuse 12 zu sehen; die Lenkwelle 18 hat sich dabei aus ihrer verdrehten Stellung der Nullage angenähert. Entsprechend sind die Positionsmarken 30 näher zur Nullage hin gewandert.

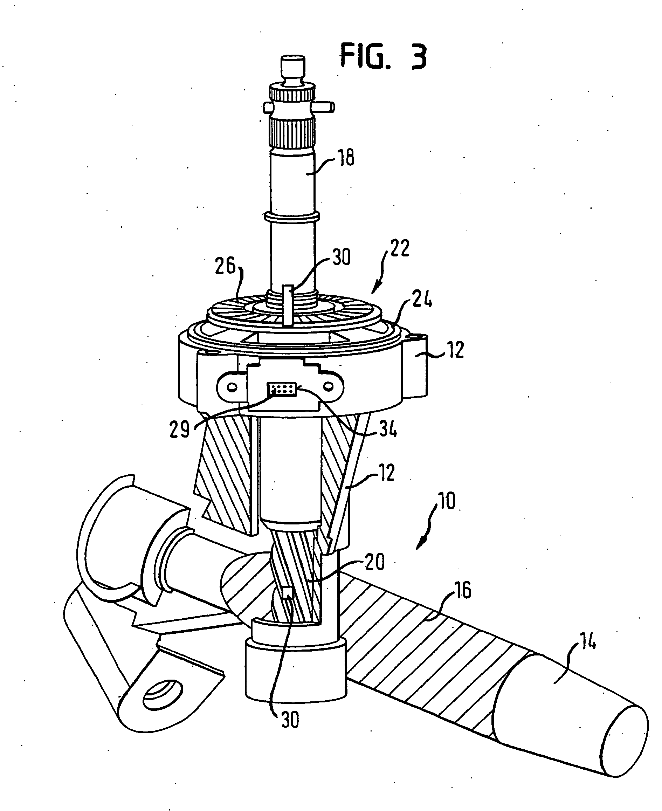

In Figur 3 ist das Lenkgetriebe 10 mit vollständig eingesetzter Lenkwelle 18 gezeigt. Durch den Eingriff der Ritzelverzahnung 20 in die Verzahnung 16 der Zahnstange 14 hat sich die Lenkwelle 18 in ihre Nullage oder Mittellage zurückgedreht. Entsprechend befindet sich auch der Rotor 26 relativ zum Gehäuse 24 des Sensors 22 wieder in der Nullage. Die Positionsmarken 30 befinden sich dementsprechend auf demselben Radius wie die in Figur 1 gezeigte Nase am Gehäuse 24. Daher sind jetzt die Aussparungen, in die das Arretierungsmittel 32 am Gehäuse 24 und am Rotor 26 eingesetzt war, um den Winkelbetrag gegeneinander verdreht, um den der Sensor 22 vor der Montage aus seiner Nullage verdreht wurde. Der Steckverbinder 29 befindet sich nun hinter einer Aussparung 34 im Lenkgetriebegehäuse 12, so daß er problemlos mittels eines komplementären Steckverbinders kontaktiert werden kann. Dieser sorgt auch für die notwendige Abdichtung im Bereich der Aussparung 34.

Aus der Beschreibung des Montagevorgangs ist ersichtlich, daß der vorbestimmte Winkelbetrag, um den der Rotor 26 relativ zum Gehäuse 24 des Sensors 22 aus der Nullage verdreht wurde, gleich dem Winkelbetrag ist, um den die Lenkwelle 18 beim Einsetzen in das Lenkgetriebegehäuse 12 durch Eingriff der beiden Schrägverzahnungen ineinander verdreht wird.

## Patentansprüche

1. Verfahren zur Montage eines Lenkwinkel- und Lenkmomentsensors an einem Lenkgetriebe mittels der folgenden Schritte:
- es wird ein Lenkwinkel- und Lenkmomentsensor (22) bereitgestellt, der ein Gehäuse (24) und einen Rotor (26) aufweist;
- der Rotor (26) wird relativ zum Gehäuse (24) um einen vorbestimmten Winkelbetrag gegenüber einer Nullage verdreht;
- der Rotor (26) wird an einer Lenkwelle (18) angebracht, die mit einer Ritzelverzahnung (20) versehen ist;
- die Lenkwelle (18) wird in ein Lenkgetriebe (10) eingesetzt, das eine Zahnstange (14) aufweist, wobei das Gehäuse (24) in einer vorbestimmten Winkelstellung am Lenkgetriebe (10) festgelegt wird und die Lenkwelle (18) zusammen mit dem Rotor (26) durch den Eingriff der Ritzelverzahnung (20) in die Zahnstange (14) gedreht wird, bis der Rotor (26) relativ zum Gehäuse (24) die Nullage wieder erreicht hat.

2. Verfahren nach Anspruch 1, **dadurch gekennzeichnet, daß** der Rotor (26) relativ zum Gehäuse (24) in der verdrehten Stellung arretiert wird.

3. Lenkgetriebe mit einem Lenkwinkel- und Lenkmomentsensor, wobei der Sensor (22) ein Gehäuse (24) und einen Rotor (26) aufweist, wobei das Gehäuse (24) mittels einer Schiebeführung (28) am Lenkgetriebe (10) festgelegt ist.

4. Lenkgetriebe nach Anspruch 3, **dadurch gekennzeichnet, daß** das Lenkgetriebe (10) eine Aussparung (34) aufweist und das Gehäuse (24) mit einem Steckverbinder (29) versehen ist, der hinter der Aussparung (34) angeordnet ist.

5. Lenkgetriebe nach Anspruch 3 oder Anspruch 4, **dadurch gekennzeichnet, daß** das Gehäuse (24) und der Rotor (26) mit einer Aufnahme für ein Arretierungsmittel (32) versehen sind.

## Claims

1. A method of mounting a steering angle and steering torque sensor to a steering gear by means of the following steps:
- providing a steering angle and steering torque sensor (22) which includes a housing (24) and a rotor (26);
- rotating the rotor (26) relative to the housing (24) through a predetermined angular amount with respect to a zero position;
- attaching the rotor (26) to a steering shaft (18) that is provided with a pinion toothing (20);
- inserting the steering shaft (18) into a steering gear (10) which includes a toothed rack (14), the housing (24) being fixed in place at the steering gear (10) in a predetermined angular position, and the steering shaft (18) being rotated together with the rotor (26) by the pinion toothing (20) engaging in the toothed rack (14) until the rotor (26) has returned to the zero position relative to the housing (24).

2. The method according to claim 1, **characterized in that** the rotor (26) is arrested in the rotated position relative to the housing (24).

3. A steering gear comprising a steering angle and steering torque sensor, the sensor (22) including a housing (24) and a rotor (26), the housing (24) being fixed in place at the steering gear (10) by means of a sliding guide (28).

4. The steering gear according to claim 3, **characterized in that** the steering gear (10) includes a recess (34) and the housing (24) is provided with a plug connector (29) which is disposed behind the recess (34).

5. The steering gear according to claim 3 or claim 4, **characterized in that** the housing (24) and the rotor (26) are provided with a mount for an arresting means (32).

## Revendications

1. Procédé de montage d'un capteur d'angle de direction et de couple de direction sur un mécanisme de direction au moyen des étapes suivantes :
- il est prévu un capteur (22) d'angle de direction et de couple de direction qui comporte un boîtier (24) ainsi qu'un rotor (26) ;
- le rotor (26) est tourné relativement au boîtier (24) d'une valeur angulaire prédéterminée par rapport à une position zéro ;
- le rotor (26) est monté sur un arbre de direction (18) qui est pourvu d'une denture de pignon (20) ;
- l'arbre de direction (18) est placé dans un mécanisme de direction (10) comportant une crémaillère (14), le boîtier (24) étant immobilisé sur le mécanisme de direction (10) dans une position angulaire prédéterminée, et l'arbre de direction (18) étant tourné conjointement avec le rotor (26) en raison de l'engrenage de la denture de pignon (20) dans la crémaillère (14), jusqu'à ce que le rotor (26) ait de nouveau atteint la position zéro par rapport au boîtier (24).

2. Procédé selon la revendication 1, **caractérisé en ce que** le rotor (26) est arrêté dans la position tournée par rapport au boîtier (24).

3. Mécanisme de direction présentant un capteur d'angle de direction et de couple de direction, le capteur (22) comportant un boîtier (24) ainsi qu'un rotor (26), le boîtier (24) étant immobilisé sur le mécanisme de direction (10) au moyen d'un guidage coulissant (28).

4. Mécanisme de direction selon la revendication 3, **caractérisé en ce que** le mécanisme de direction (10) présente un évidement (34) et **en ce que** le boîtier (24) est pourvu d'un connecteur à fiches (29) agencé derrière l'évidement (34).

5. Mécanisme de direction selon la revendication 3 ou la revendication 4, **caractérisé en ce que** le boîtier (24) et le rotor (26) sont pourvus d'un logement pour un moyen d'arrêt (32).
